# EUROPÄISCHE PATENTSCHRIFT

(11) **EP 1 330 413 B1**
(45) Veröffentlichungstag und Bekanntmachung des Hinweises auf die Patenterteilung: **31.05.2006**
(21) Anmeldenummer: 01992686.4
(22) Anmeldetag: 27.10.2001
(51) Int. Cl.: C01F 7/06, C01F 7/74, C02F 9/00, C02F 1/66

(54) **VERFAHREN ZUR ENTSORGUNG VON IN EINEM ALUMINIUM-ELOXALWERK ANFALLENDEN ABFALLSTOFFEN**
METHOD FOR DISPOSING OF WASTE, PRODUCED IN AN ALUMINIUM ANODISATION PLANT
PROCEDE D'EVACUATION DE DECHETS PRODUITS DANS UNE USINE D'ANODISATION D'ALUMINIUM

(30) Priorität: 31.10.2000 DE 10054128
(43) Veröffentlichungstag der Anmeldung: 30.07.2003
(73) Patentinhaber: Weber, Heiko, 74889 Sinsheim (DE)
(72) Erfinder: Weber, Heiko, 74889 Sinsheim (DE)
(74) Vertreter: Lauer, Joachim
(86) Internationale Anmeldenummer: PCT/DE2001/004092
(87) Internationale Veröffentlichungsnummer: WO 2002/036492

(56) Entgegenhaltungen:
- DE-A- 2 554 218
- DE-C- 4 311 716
- ES-A- 2 133 127
- FR-A- 2 426 020
- US-A- 4 265 863
- RAYZMAN V ET AL: "SODIUM ALUMINATE FROM ALUMINA-BEARING INTERMEDIATES AND WASTES" JOM, MINERALS, METALS AND MATERIALS SOCIETY, WARRENDALE, US, Bd. 50, Nr. 11, 1. November 1998 (1998-11-01), Seiten 32-37, XP000786960 ISSN: 1047-4838

## Beschreibung

### TECHNISCHES GEBIET

Die vorliegende Erfindung betrifft Verfahren zur Entsorgung von in einem Aluminium-Eloxalwerk anfallenden Abfallstoffen. Diese umfassen eine stark alkalische und Aluminium in recht hoher Konzentration enthaltende Beizen, schwächere alkalische und Aluminium in geringerer Konzentration enthaltende Standspülen, saures, aluminiumhaltiges Alteloxal sowie auch noch Aluminiumhydroxid-Schlamm.

### STAND DER TECHNIK

In Werken der Aluminium behandelnden und erzeugenden Industrie, speziell aber Eloxalwerken, werden die zu eloxierenden Aluminiumteile nacheinander einer Reihe von mehreren Bädern unterzogen, wobei das eigentliche Eloxieren erst gegen Schluss durch anodische Oxidation im sauren Medium (Schwefelsäure) erfolgt. Als Eingangsbad dient dagegen eine alkalische Beize auf der Basis von Natronlauge, die auch als "E6"-Beize bezeichnet wird. In diesem Bad wird bereits vorhandenes Aluminiumoxid von der Aluminiumoberfläche abgelöst und diese dadurch gereinigt. Die Beize reichert sich auf diese Weise mit Aluminium immer mehr an, was zunehmend auch die Effektivität des Reinigungsprozesses beeinträchtigt. Eine gewisse Konzentration an Aluminium in der Beize ist aber erwünscht, um den Lösungsprozess langsamer ablaufen zu lassen, weil dadurch gleichmässigere, qualitativ hochwertigere Oberflächen hergestellt werden können. Die Beize wird deshalb üblicherweise auf einem bestimmten, relativ hohen Aluminiumgehalt gehalten welcher im Bereich von 150 - 200 g/l Aluminium liegt. Der Anteil an freier Natronlauge beträgt zwischen 60 - 100 g/l, was einen pH-Wert von > 14 ergibt.

Als zweites Bad folgt ein Spülbad, das grundsätzlich reines Wasser sein könnte, in dem sich durch Eintrag aus dem ersten Bad, der Beize, mit der Zeit jedoch auch Aluminium und Natronlauge ansammelt. Die sogenannte Standspüle ist naturgemäss jedoch wesentlich geringer konzentriert als die Beize bzw. wird so oft erneuert, so dass sie nicht wesentlich aufkonzentrieren kann.

Auf der sauren Seite fällt aus dem eigentlichen Eloxalbad fällt sogenanntes Alteloxal an, welches ebenfalls eine gewisse Menge an Aluminium im Bereich zwischen 8 - 20 g/l sowie 130 - 200 g/l Schwefelsäure enthält. Der pH-Wert liegt bei < 1.

Aus Neutralisationsprozessen verschiedenster Art entsteht in einem Eloxalwerk immer auch eine gewisse Menge an Aluminiumhydroxid-Schlamm, der meist durch Pressen entwässert und nachfolgend als Quasi-Feststoff in Containern gesammelt wird.

Eloxalwerke stehen häufig räumlich in relativ engem Kontakt zu anderen, Aluminium verarbeitenden Betrieben wie insbesondere Giessereien und/oder Werkzeugbauern. Auch dort fallen als Abfallstoffe alkalische Beizen der erwähnten Art an, die entsorgt werden müssen.

Zur Entsorgung der genannten Abfallstoffe sind als Stand der Technik insbesondere folgende Methoden in Gebrauch:

Die Aluminium als Wertstoff in grösserer und für eine Verwertung interessanter Menge enthaltende Beize wird im Werk gesammelt und regelmässig per Tanklastzug von einem darauf spezialisierten Unternehmen gegen Entgelt abgeholt. Von diesem wird die alkalische, aluminiumhaltige Lösung zusammen mit entsprechenden aluminiumhaltigen Lösungen anderer Eloxalwerke in grossen Sammelbehältern gemischt, durch Zugabe von Natronlauge stabilisiert, durch Verdünnen auf einen bestimmten Aluminiumgehalt (z.B. 6 - 10 g/l) eingestellt und schliesslich in grossen Sammelbehältern so lange absetzen gelassen, bis sie sich in eine klare und eine trübe Fraktion getrennt hat. Die klare Fraktion wird als Natrium-Aluminat an Klärwerke weiterverkauft, die sie als Phosphatfällungsmittel verwenden. Bedingt durch die Tatsache, dass verschiedenste Beizen unterschiedlicher Eloxalwerke zusammen verwertet werden, variiert das hergestellte Produkt in seiner Zusammensetzung und Qualität erheblich. Die trübe Fraktion wird an die chemische Industrie abgegeben. Anstatt durch Sedimentation kann die klare Phase auch durch Filtration erhalten werden.

Die Standspüle wird für eine entsprechende Verwertung als zu gering konzentriert angesehen. Sie wird, weil alkalisch, zumeist im Eloxalwerk selbst zur Neutralisation des sauren Alteloxals eingesetzt. Der hierbei aus der Spüle einerseits und dem Alteloxal ausfallende Aluminiumhydroxid-Schlamm wird zusammen mit dem weiteren solchen Schlamm (der wie erwähnt ja auch anderweitig in gewisser Menge immer anfällt) durch Pressen entwässert und nachfolgend entweder deponiert oder in einer Ziegelei als Zuschlagstoff für die Ziegelherstellung abgegeben. Zumindest das Deponieren des Schlamms stellt für das Eloxalwerk einen weiteren Kostenfaktor dar.

Ein zusätzliches Problem resultiert daraus, dass das beim Neutralisieren entstehende und in der Presse aus dem Schlamm gepresste Wasser wegen der im Alteloxal enthaltenen Schwefelsäure stark sulfathaltig ist und von daher wegen seiner Aggressivität gegenüber Beton und damit auch den meisten Abwasserrohren zunehmend auch nicht mehr ohne weiteres über das normale Abwassersystem entsorgt werden kann.

Die Dokumente US-A-4 265 863 und FR-A-2 426 020 offenbaren Verfahren zur Behandlung der Abwässer aus Aluminiumeloxalwerken. Die Verfahren beinhalten das Mischen von verbrauchter alkalischer Beize mit saurem Alteloxal unter Bildung von Aluminiumoxidschlamm. Im Dokument US-A-4 265 863 wird ein anderer Teil des Alteloxals mit Aluminiumoxidschlamm vermischt.

Das Dokument DE 25 54 218 A offenbart ebenfalls ein Verfahren zur Behandlung der Abwässer aus Aluminiumeloxalwerken. Das Alteloxal wird mit alkalischem Natriumaluminat gemischt, um eine saure Aluminiumsulfatlösung zu erhalten, die unmittelbar für die Abwasserklärung verwendet werden kann.

### DARSTELLUNG DER ERFINDUNG

Es ist Aufgabe der Erfindung, ein alternatives Entsorgungs- und Verwertungskonzept für Eloxalwerke anzugeben, welches kostengünstiger oder gar gewinnbringend ist, weniger Transporte erfordert, zu qualitativ hochwertigeren Verwertungsprodukten führt und insgesamt umweltfreundlicher ist. Diese Aufgabe wird gelöst durch ein Verfahren, wie es in Anspruch 1 gekennzeichnet ist.

Bevorzugte Ausgestaltungen sind in den Unteransprüchen gekennzeichnet.

Kern der Verfahrens nach Anspruch 1 ist, dass neben der Beize auch die Standspüle zur Herstellung von Natriumaluminat-Lösung als Phosphatfällungsmittel verwendet wird. Obwohl diese Aluminium sowie Natronlauge nur in geringerer Konzentration enthält, lassen sich durch geeignetes Mischen der Beize mit der Spüle in vorteilhafter Weise die handelsüblichen Aluminium-Konzentrationen herstellen, für die die üblichen Beizenkonzentrationen sowieso zu hoch sind.

Vorteilhaft für das erfindungsgemässe Verfahren ist es, wenn die Standspüle nicht zu schwach konzentriert ist. Wie sich herausgestellt hat, kann die Spüle ohne merkliche Beeinträchtigung im Eloxierprozess ohne weiteres so hoch konzentriert werden, dass sie einen Aluminiumanteil bis zu 100 g/l und einen Gehalt an Natronlauge bis zu 50 gl aufweist. Es wird deshalb bevorzugt die Standspüle so konzentriert, dass sie einen Aluminiumgehalt von mindestens 50 g/l und einen Gehalt an Natronlauge von mindestens 25 g/l aufweist.

Wie eingangs bereits erwähnt, ist es üblich, die Natriumaluminat-Lösung sich absetzen zu lassen, dadurch in eine klare und eine trübe Fraktion zu separieren und als Phosphatfällungsmittel an die Klärwerke lediglich die klare Fraktion abzugeben. Bisher wurde dies in den ebenfalls erwähnten sehr grossen Sammelbehältern durchgeführt und vor allem deshalb, weil das Absetzen längere Zeit im Bereich von 14 - 28 Tagen benötigte.

Ausreichend grosse Sammelbehälter, welche die während mindestens eines halben Monats anfallende Flüssigkeit aufnehmen können, stehen in einem Eloxalwerk üblicherweise nicht zur Verfügung. Wenn man jedoch gemäss einer weiteren bevorzugten Ausführungsform der Erfindung die Mischung aus Beize und Spüle durch Zugabe nur eines Teils der für ihre Vollstabilisierung nötigen Menge an Natronlauge vor dem Absetzenlassen lediglich teilstabilisiert, erhält sie eine wesentlich geringere Viskosität und der Absetzprozess benötigt weniger als 14 Tage. Erst danach, d.h. nach ihrer Abtrennung von der trüben Fraktion wird die klare Fraktion durch Zugabe weiterer Natronlauge vollstabilisiert. In gleicher Weise wird auch die trübe Fraktion stabilisiert.

Auf diese Art und Weise kann auch in einem normalen Eloxalwerk das Mischen der Beize und der Spüle sowie die Weiterverarbeitung der Mischung zum fertigen Produkt ausgeführt werden, ohne dass hierzu grosse Sammelbehälter erforderlich wären, die in einem oder auf dem Gelände eines Eloxalwerks selten auch nur aufgestellt werden könnten. Der aufwendige Transport der Beize zu einem zentralen Sammellager entfällt hierdurch. Das fertige Produkt kann direkt und auf kurzem Wege an in der Nähe liegende Klärwerke abgegeben werden, die heute praktisch in jeder Gemeinde vorhanden sind.

Die im Rahmen der Erfindung gemäss Anspruch 1 verwertete Standspüle steht natürlich nicht mehr für die Neutralisation des Alteloxals wie bisher zur Verfügung. Zur Entsorgung und Verwertung des Alteloxals schlägt die Erfindung jedoch das Verfahren nach Anspruch 7 vor.

Dabei wird Alteloxal mit der bei der Herstellung der alkalischen Natriumaluminatlösung anfallenden trüben Fraktion gemischt.

Das Verfahren von Anspruch 7 kann in einer ersten Ausführungsart als Neutralisierungsverfahren eingesetzt werden, wobei Aluminiumhydroxid als Schlamm ausfällt. Dieser kann in herkömmlicher Weise durch Pressen entwässert und durch Deponieren entsorgt oder an ein Ziegelwerk als Zuschlagsstoff abgegeben werden.

Das Verfahren von Anspruch 7 kann in einer zweiten Ausführungsart jedoch auch zur Herstellung einer sauren Aluminium-Lösung eingesetzt werden, die (nach Abfiltrieren unlöslicher Stoffe) an ein Klärwerk als saures Phosphatfällungsmittel abgegeben werden kann. Die Zugabe einer gewissen Menge einer weiteren Säure, insbesondere von kostengünstiger Salzsäure, kann hierbei von Vorteil sein.

Für die Verwendung in einer Kläranlage eingestelltes Natriumaluminat enthält allerdings zu wenig Aluminium und (sofern bereits teil- oder vollstabilisiert) zuviel Natronlauge, um daraus durch Zusatz von ebenfalls nicht sehr viel Aluminium enthaltendem Alteloxal saure Aluminiumlösung mit einem Aluminiumgehalt zwischen auf 2 - 4 % herstellen zu können. Der Aluminiumgehalt in der Mischung muss deshalb erhöht werden, was durch Zusatz von Beize und/oder Aluminiumhydroxid-Schlamm erreicht werden kann.

Bei dieser zweiten Ausführungsart des Verfahrens von Anspruch 7 kann mit Vorteil also auch Aluminiumhydroxid-Schlamm eingesetzt und aufgelöst werden. Derartiger Schlamm fällt, wie schon erwähnt, in einem Eloxalwerk aber auch in externen, Aluminium verarbeitenden Betrieben immer in gewisser Menge an, und entsteht auch bei der vorerwähnten Neutralisierung der trüben Fraktion des Natriumaluminats.

Bei dieser Ausführungsart des Verfahrens von Anspruch 7 könnte mit Vorteil der Neutralisierungsschritt der trüben Fraktion und damit der Anfall von Aluminiumhydroxid-Schlamm und von sulfathaltigern Abwasser auch ganz vermieden werden.

Mit den vorbeschriebenen Verfahren gelingt es, in einem Eloxalwerk anfallende Abfallstoffe auf neuartige Weise und so miteinander zu kombinieren, dass daraus unmittelbar verwertbare Produkte entstehen. Bei geeigneter Ausführung der Verfahren lässt sich auch die Massenbilanz dahingehend erfüllen, dass bis auf den erwähnen Filtrationsrückstand bei der Herstellung der sauren Aluminium-Lösung, der anteilig unter 5 Gew.-% betragen kann, sämtliche Abfallkomponenten verwertet werden und in die beiden unmittelbar in Klärwerken einsetzbaren Produkte eingehen.

In das geschilderte Entsorgungskonzept können mit Vorteil auch Beizen oder Aluminiumhydroxid-Schlamm integriert werden, die in einem Werkzeugbau anfallen oder einer nahegelegenen Aluminium-Giesserei.

Durch Variieren der Mengen zwischen den Verfahren gemäss Anspruch 1 und Anspruch 7 lässt sich darüberhinaus in gewissem Rahmen steuern, in welcher Menge die beiden Endprodukte, d.h. einerseits alkalisches Natriumaluminat und andererseits saure Aluminium-Lösung anfallen und dadurch auf den aktuellen Bedarf nahegelegener Klärwerke reagieren. Klärwerke werden nämlich nur das eine oder nur das andere der beiden Produkte bevorzugen, je nachdem ob ihr Wasser alkalisch oder sauer ist.

Als Vorteil der Erfindung ist auch noch anzusehen, dass die Verwertungsprodukte gegenüber denen nach dem Stand der Technik mit wesentlich besserer Qualität und Konstanz hergestellt werden können, weil die Zusammensetzung der in die Verwertung einbezogenen Abfallstoffe nur eines einzigen Eloxalwerkes wesentlich konstanter und besser kontrollierbar ist, als die Zusammensetzung der Mischung verschiedenster Stoffe unterschiedlicher Werke.

### KURZE ERLÄUTERUNG DER FIGUREN

Die Erfindung soll nachfolgend anhand von Ausführungsbeispielen im Zusammenhang mit der Zeichnung näher erläutert werden. Es zeigt:
- Fig. 1: einen ersten Verfahrensablauf, bei welchem aus Beize und Standspüle eine Natriumaluminat-Lösung hergestellt wird.
- Fig. 2: einen zweiten Verfahrensablauf, in welchem Natriumaluminat-Lösung unter Bildung von Aluminiumhydroxid-Schlamm neutralisiert wird;
- Fig. 3: einen dritten Verfahrensablauf, in welchem Aluminiumhydroxid-Schlamm mit Alteloxal aufgelöst und eine saure Aluminium-Lösung hergestellt wird; und
- Fig. 4: einen vierten Verfahrensablauf, in welchem Natriumaluminat und/oder Beize mit Alteloxal gemischt und eine saure Aluminium-Lösung hergestellt wird.

### WEGE ZUR AUSFÜHRUNG DER ERFINDUNG

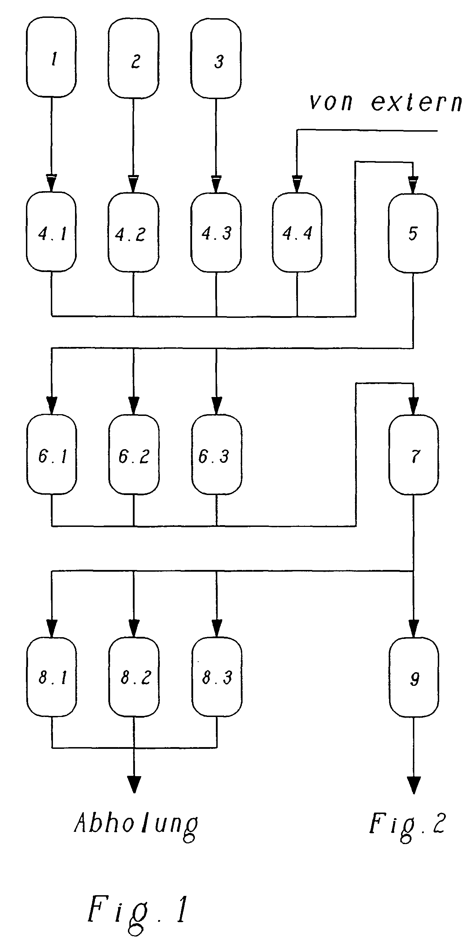

In Fig. 1 bezeichnet 1 eine Produktionswanne eines Eloxalwerks mit einer alkalischen Beize und 2 eine entsprechende Produktionswanne mit einer weniger stark konzentrierten alkalischen Standspüle. Die Wanne 3 könnte eine der Beize in der Wanne 1 etwa entsprechende Flüssigkeit eines Werkzeugbaus enthalten. Von den drei Wannen 1 - 3 werden die Laugen je nach Anfall im Produktionsprozess in Sammeltanks 4.1 - 4.3 überführt, wo sie lediglich so lange zwischengelagert werden, bis sich jeweils eine für die Weiterverarbeitung ausreichende Menge darin angesammelt hat. Ein weiterer Sammeltank 4.4 kann beispielsweise für die Aufnahme einer von extern aus einer nahegelegenen Giesserei oder dergleichen zugeführten Beize vorgesehen sein.

Durch geeignetes Mischen, insbesondere der hochkonzentrierten Beize aus dem Sammeltank 4.1 und der Standspüle aus dem Sammeltank 4.2 in einem Mischtank 5 und unter Zugabe von Natronlauge zu der Mischung zu ihrer Stabilisierung wird eine Aluminat-Lösung hergestellt, wie sie in Bezug auf ihren Aluminiumgehalt von Klärwerken als Phosphatfällungsmittel üblicherweise eingesetzt wird. Es handelt sich hierbei insbesondere um Aluminiumgehalte von 6 - 10 %.

Das in dem Mischtank 5 sich ergebende Natriumaluminat ist zunächst schwärzlich trüb, wobei die Trübung jedoch durch einen Teil des Aluminats und nicht oder zumindest nur zu einem sehr geringen Teil durch Verschmutzungen verursacht wird. Da von den Klärwerken üblicherweise aber klares Produkt bevorzugt wird, ist der Mischstufe eine Absetzstufe mit Absetzbecken 6.1 - 6.3 nachgeschaltet. Dort lässt man die Flüssigkeit ruhen, bis sie sich in eine klare und eine trübe Fraktion separiert hat. Anschliessend zieht man die klare Fraktion ggf. über ein weiteres Mischbecken aus den Absetzbecken 6.1. - 6.3 ab und lagert sie zu Abholung bereit als fertiges Natriumaluminat in Lagertanks 8.1 - 8.3. Die volumenmässig nur etwa 10 - 20 % betragende trübe Fraktion wird in einen Lagertank 9 überführt und dort für die anhand von Fig. 2 nachfolgend erläuterte Weiterverwertung auf Vorrat gehalten.

Wie erwähnt, wird die im Mischtank 5 hergestellte Mischung durch Zugabe von Natronlauge stabilisiert. Die Natronlauge verhindert, dass Aluminiumhydroxid aus der Lösung ausfallen kann. Gibt man soviel Natronlauge zu, wie für eine Langzeitstabilisierung (mindestens 1/2 Jahr) erforderlich ist, dann erhält die Flüssigkeit eine so hohe Viskosität, dass der nachfolgende Absetzprozess mehrere Wochen betragen kann. In einem Eloxalwerk sind solche Zeiten meist nicht akzeptabel, zumal wenn die Absetzbecken 6.1 - 6.2 nur eine begrenzte Aufnahmefähgikeit haben und von ihrem Fassungsvermögen her z.B. nur etwa dem Fassungsvermögen der Produktionswannen 1 - 3 entsprechen. Hier hilft, bezüglich der Mischung im Mischtank 5 lediglich eine Vorstabilisierung vorzunehmen und zwar durch Zugabe eines Teils der für ihre Vollstabilisierung notwendigen Menge an Natronlauge. Hierdurch behält die Flüssigkeit eine niedrige Viskosität und der Absetzvorgang verläuft entsprechend schneller. Nach dem Absetzen und dem Trennen der Fraktionen kann durch Zugabe der restlichen Menge an Natronlauge, z.B. im Mischbecken 7, die Vollstablisierung immer noch nachgeholt werden. Auf diese Weise gelingt es, durch Zugabe von z.B. zunächst nur ca. 30% der Gesamtmenge an Natronlauge die Absetzzeit auf weniger als 4 Tage zu verkürzen.

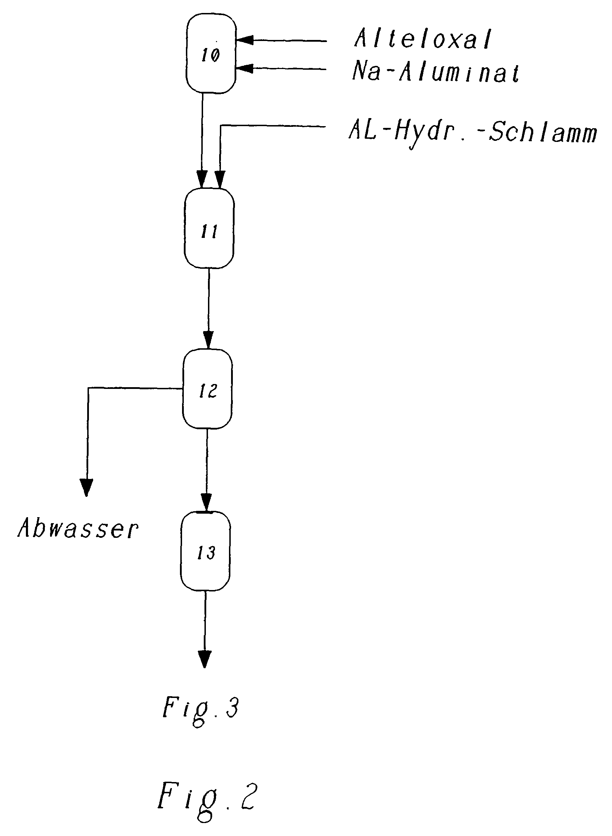

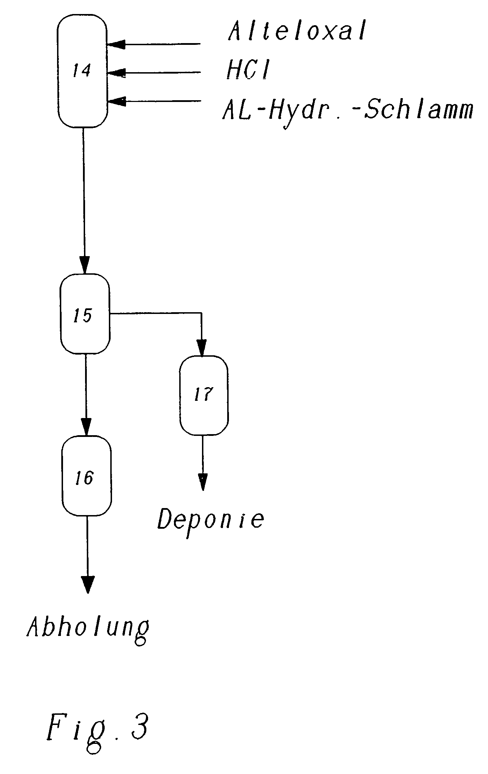

Bei dem Verfahren gemäss Fig. 2 wird Natriumaluminat-Lösung, und zwar die trübe Fraktion des Verfahrens von Fig. 1 aus dem Lagertank 9 von Fig. 1, in einem Neutralisierungsbehälter 10 mit Alteloxal neutralisiert, wobei nasser Aluminiumhydroxid-Schlamm entsteht. Dieser wird in einem Stapelbehälter 11 gesammelt und von dort chargenweise in einer Kammerfilterpresse 12 abgepresst. Der ausgepresste Filterkuchen wird in einen Container 13 gesammelt und z.B. für die nachfolgend anhand von Fig. 3 erläuterte Weiterverarbeitung zur Verfügung gehalten. Die ausgepresste Flüssigkeit wird als Abwasser abgeführt. In den Stapelbehälter 11 kann auch anderweitig im Eloxalwerk entstehender Aluminiumdydroxid-Schlamm eingeführt werden.

Bei dem Verfahren von Fig. 3 wird Aluminiumhydroxid-Schlamm, insbesondere der aus dem Container 13 von Fig. 2 unter Zugabe von Alteloxal und Salzsäure in einem Behälter 14 aufgelöst, wobei eine saure Aluminium-Lösung entsteht. Der Gehalt an Aluminium wird so eingestellt, wie er von Klärwerken für ein saures Phosphatfällungsmittel verlangt wird, inbesondere auf 2 - 4 %. Aluminium. Nachfolgend wird die Lösung noch abfiltriert und dann in einem Lagertank 16 zur Abholung bereit gehalten. Zum Filtrieren kann wieder eine Kammerfilterpresse 15 wie bei dem Verfahren gemäss Fig. 2 verwendet werden. Im Unterschied zum Verfahren gemäss Fig. 2 wird hier allerdings das Filtrat als Wertstoff verwendet, wohingegen der Filterkuchen als nicht weiter verwertbarer Abfall verworfen wird. Er wird in einem Sammelbehälter 17 gesammelt und kann beispielsweise durch Deponieren entsorgt werden. Er enthält fast kein Aluminium mehr.

Ein besonderer Vorteil des Verfahrens gemäss Fig. 3 ist darin zu sehen, dass durch die Verwertung des Filtrats der von der Schwefelsäure im eingesetzten Alteloxal herrührende Sulfatanteil nicht im Abwasser landet. Alles Sulfat aus dem im Verfahren von Fig. 3 eingesetzten Alteloxal befindet sich im Produkt, d.h. in der sauren Aluminium-Lösung im Lagertank 16. Hierdurch wird in vorteilhafter Weise die Sulfatfracht im Abwasser des Eloxalwerks reduziert. Soweit bei dem Verfahren nach Fig. 2 sulfathaltiges Abwasser entsteht, ist dessen Menge gegenüber der beim Stand der Technik anfallenden Menge erheblich reduziert, weil bei den erfindungsgemässen Verfahren insgesamt wesentlich weniger Aluminiumhydroxid-Schlamm erzeugt wird.

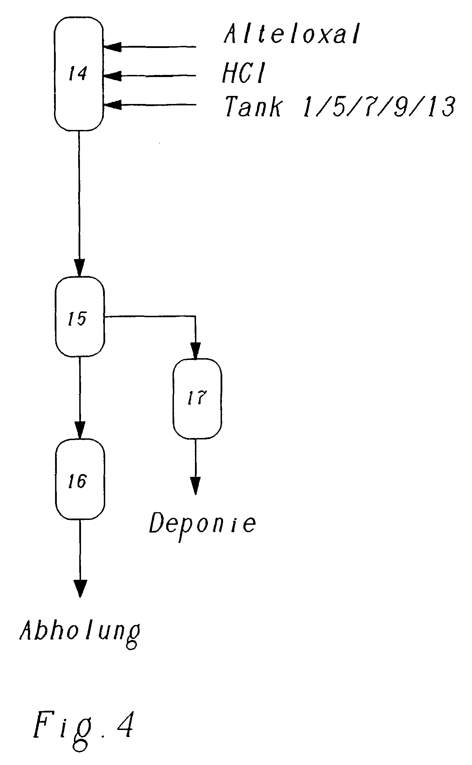

Der Sulfatanteil im Abwasser könnte sogar noch weiter reduziert werden, wenn man wie in Fig. 4 dargestellt, die trübe Fraktion des Natriumaluminats aus dem Verfahren gemäss Fig. 1 unter Zusatz von Beize und/oder anderweitig vorhandenem Aluminiumhydroxid-Schlamm mit soviel Alteloxal und ggf. zusätzlicher Salzsäure behandeln würde, dass unmittelbar die gewünschte saure Aluminium-Lösung entsteht und der Neutralisierungsschritt mit dem Schlammanfall im Verfahren gemäss Fig. 2 übersprungen wird.

Bei den beschriebenen Verfahren sind diverse alternative Ausführungen möglich. So werden bei dem Verfahren von Fig. 1 z.B. die Sammeltanks 4.1. - 4.4 nicht unbedingt benötigt, wenn die Laugen aus den verschiedenen Produktionswannen direkt im richtigen Mischungsverhältnis in den Mischtank 5 eingespeist werden können. Der Mischtank 5 könnte ebenfalls entfallen und die Mischung direkt in den Absetzbecken 6.1 - 6.3 hergestellt werden. Das Mischbecken 7 dient, wie erläutert, zur Vollstabilisierung des Natriumaluminats. Insbesondere wenn diese bereits vorgängig erfolgt ist, könnte auch das Mischbecken 7 entfallen. Die Anzahl der Absetzbecken 6.1. - 6.3 sowie der Lagertanks 8.1 - 8.3 für das klare Fertigprodukt ist natürlich beliebig. Bei dem Verfahren nach Fig. 2 könnte auf den Stapelbehälter 11 ggf. verzichtet werden. Schliesslich können gewisse Vorrichtungsteile von den drei beschriebenen Verfahren gemeinsam benutzt werden, was insbesondere für den Behälter 10/14 sowie die Kammerfilterpresse 12/15 der Verfahren von Fig. 2 und Fig. 3 gilt.

Alle beschriebenen Vorrichtungsteile und Behälter sind bevorzugt direkt in einem einzigen Eloxalwerk installiert oder befinden sich zumindest jeweils so nahe beieinander, dass die Flüssigkeiten zwischen ihnen durch Pumpen transportiert werden können.

Zusammenfassend ergibt sich, dass durch die vorgeschlagenen Verfahren auf rationelle Weise einerseits eine alkalische Natriumaluminat-Lösung und andererseits eine Aluminium-Lösung hergestellt werden können, die von ihrem Aluminiumgehalt her unmittelbar in einem Klärwerk zur Phosphatfällung einsetzbar sind. In dem Verfahren zur Herstellung des alkalischen Produktes anfallende Abfallstoffe können mit Vorteil in dem Verfahren zur Herstellung des sauren Produktes verwertet werden. Durch Verschiebung des Schwerpunktes zwischen den beiden Verfahren lässt sich einerseits auf die Menge reagieren, mit der die genannten Abfallstoffe jeweils anfallen und andererseits auch auf die Menge, mit der alkalisches oder saures Endprodukt jeweils benötigt wird. Die im Rahmen der erfindungsgemässen Verfahren übrig bleibende Menge an nicht verwertbarem Abfall kann auf < 5% reduziert werden.

### BEZEICHNUNGSLISTE

- 1: Produktionswanne alkalische Beize
- 2: Produktionswanne alkalische Standspüle
- 3: Produktionswanne Werkzeugbau
- 4.1: Sammeltank alkalische Beize
- 4.2: Sammeltank alkalische Spüle
- 4.3: Sammeltank Werkzeugbau
- 4.4: Sammeltank externe alkalische Medien
- 5: Mischtank
- 6.1 - 6.3: Absetzbecken
- 7: Mischbecken
- 8.1 - 8.3: Lagertanks für klare Fraktion der Natriumaluminat-Lösung (Fertigprodukt)
- 9: Lagertank für trübe Fraktion Natriumaluminat-Lösung
- 10: Neutralisationsbehälter
- 11: Stapelbehälter
- 12: Kammerfilterpresse
- 13: Sammelcontainer für aluminiumhaltigen Filterkuchen
- 14: Behälter
- 15: Kammerfilterpresse
- 16: Lagertank für saure Aluminium-Lösung (Fertigprodukt)
- 17: Sammelcontainer für Filterkuchen ohne Aluminium

## Patentansprüche

1. Verfahren zur Entsorgung von in einem Aluminium-Eloxalwerk anfallenden Abfallstoffen umfassend eine stark alkalische und Aluminium in hoher Konzentration enthaltende Beize sowie eine schwächer alkalische und Aluminium in geringerer Konzentration enthaltende Standspüle, **dadurch gekennzeichnet, dass** aus Beize und Standspüle durch Mischen und unter Zugabe von Natronlauge eine langzeitstabile Natrium-Aluminat-Lösung hergestellt wird, die von ihrem Aluminiumgehalt her unmittelbar in einem Klärwerk zur Phosphatfällung einsetzbar ist.

2. Verfahren nach Anspruch 1, **dadurch gekennzeichnet, dass** der Aluminiumgehalt in der Natrium-Aluminat-Lösung auf einen Wert zwischen 6% - 10% eingestellt wird.

3. Verfahren nach Anspruch 1 oder 2, **dadurch gekennzeichnet, dass** die Standspüle aus dem Eloxierprozess mit einem Aluminiumanteil von grösser 50 g/l und einem Gehalt an Natronlauge von mindestens 25 g/l übernommen wird.

4. Verfahren nach einem der Ansprüche 1 - 3, **dadurch gekennzeichnet, dass** die Mischung aus Beize und Spüle durch Absetzenlassen in eine klare und eine trübe Fraktion separiert und die beiden Fraktionen für die Weiterverarbeitung voneinander getrennt werden.

5. Verfahren nach Anspruch 43, **dadurch gekennzeichnet, dass** die Mischung aus Beize und Spüle durch Zugabe nur eines Teils der für die Vollstabilisierung nötigen Menge an Natronlauge vor dem Absetzenlassen lediglich teilstabilisiert wird und zwar derart, dass die Separierung der Mischung in ihre beiden Fraktionen lediglich in einem Bruchteil, insbesondere in weniger als der Hälfte, vorzugsweise jedoch sogar nur in weniger als einem Drittel der Zeit erfolgt, die bei einer Vollstabilisierung erforderlich wäre.

6. Verfahren nach Anspruch 5, **dadurch gekennzeichnet, dass** die klare Fraktion nach ihrer Abtrennung von der trüben Fraktion durch Zugabe weiterer Natronlauge vollstabilisiert wird.

7. Verfahren nach einem der Ansprüche 4 - 6, **dadurch gekennzeichnet, dass** die trübe Fraktion mit saurem, aluminiumhaltigern Alteloxal gemischt wird, welches in dem Aluminium-Eloxalwerk als Abfallstoff ebenfalls anfällt.

8. Verfahren nach Anspruch 7, dass der Mischung aus der trüben Fraktion und dem sauren, aluminiumhaltigen Alteloxal eine stark alkalische und Aluminium in hoher Konzentration enthaltende Beize und/oder Aluminiumhydroxid-Schlamm beigemischt wird.

9. Verfahren nach Anspruch 7 oder 8, **dadurch gekennzeichnet, dass** die Mischung unter Bildung von Aluminiumhydroxid-Schlamm neutral eingestellt wird.

10. Verfahren nach Anspruch 7 oder 8, **dadurch gekennzeichnet, dass** die Mischung so eingestellt wird, dass eine in einem Klärwerk unmittelbar einsetzbare saure Aluminium-Lösung entsteht.

11. Verfahren nach einem der Ansprüche 7 - 10, **dadurch gekennzeichnet, dass** eine weitere Säure, insbesondere konzentrierte Salzsäure, zugesetzt wird.

## Claims

1. A method for disposing of waste substances produced in an aluminium electrolytic oxidation plant, comprising a strongly alkaline pickle containing aluminium in a high concentration and a more weakly alkaline stationary rinse containing aluminium in a lower concentration, **characterised in that** a long-term stable sodium aluminate solution is produced from the pickle and stationary wash by mixing and the addition of soda lye, which solution may be used directly in a sewage treatment plant for phosphate precipitation because of its aluminium content.

2. The method according to Claim 1, **characterised in that** the aluminium content in the sodium aluminate solution is set to a value of between 6% and 10%.

3. The method according to Claim 1 or 2, **characterised in that** the stationary rinse is taken over from the anodising process with an aluminium proportion of more than 50 g/l and a soda lye content of at least 25 g/l.

4. The method according to one of Claims 1-3, **characterised in that** the mixture of pickle and rinse is separated into a clear and turbid fraction by allowing it so sediment, and **in that** the two fractions are separated from each other for further processing.

5. The method according to Claim 4, **characterised in that** the mixture of the pickle and rinse is only partially stabilised by the addition of only a proportion of the quantity of soda lye required for full stabilisation before allowing to sediment, so that the separation of the mixture into its two fractions only takes place in a fraction, in particular in less than half, but preferably even in only less than one third of the time that would be required for full stabilisation.

6. The method according to Claim 5, **characterised in that** the clear fraction is fully stabilised after its separation from the turbid fraction by the addition of further soda lye.

7. The method according to one of Claims 4 - 6, **characterised in that** the turbid fraction is missed with acid old aluminite containing aluminium, which also precipitates in the aluminium electrolytic oxidation plant as a waste substance.

8. The method according to Claim 7, **characterised in that** a strongly alkaline pickle containing aluminium in high concentration and/or aluminium hydroxide sludge is added.

9. The method according to Claim 7 or 8, **characterised in that** the mixture is neutrally set with the formation of aluminium hydroxide sludge.

10. The method according to Claim 7 or 8, **characterised in that** the mixture is set so that an acid aluminium solution is formed that can be used directly in a sewage treatment plant.

11. The method according to one of Claims 7 - 10, **characterised in that** a further acid, in particular a concentrated hydrochloric acid, is added.

## Revendications

1. Procédé pour l'élimination de déchets générés dans une usine de traitement Eloxal d'aluminium et comportant un décapant fortement alcalin et contenant de l'aluminium en concentration relativement très élevée, ainsi qu'une solution de rinçage stationnaire plus faiblement alcaline et contenant de l'aluminium en concentration plus limitée, **caractérisé en ce qu'**à partir du décapant et de la solution de rinçage stationnaire est préparée par mélangeage et avec adjonction de lessive de soude une solution d'aluminate de sodium à longue stabilité dans le temps, qui est, de par sa teneur en aluminium, susceptible d'être mise en oeuvre directement dans une usine d'épuration destinée à la précipitation de phosphates.

2. Procédé selon la revendication 1, **caractérisé en ce que** la teneur en aluminium dans la solution d'aluminate de sodium est ajustée à une valeur comprise entre 6% et 10%.

3. Procédé selon la revendication 1 ou 2, **caractérisé en ce que** la solution de rinçage stationnaire est reprise à partir du process d'éloxylation, avec une proportion d'aluminium supérieure à 50 g/l et une teneur en lessive de soude d'au moins 25 g/l.

4. Procédé selon l'une des revendications 1-3, **caractérisé en ce que** le mélange composé de décapant et de solution de rinçage stationnaire est séparé par décantation en une fraction claire et une fraction trouble et **en ce que** les deux fractions sont séparées l'une de l'autre pour la poursuite du traitement.

5. Procédé selon la revendication 4, **caractérisé en ce que** le mélange composé de décapant et de solution de rinçage stationnaire est uniquement partiellement stabilisé, par adjonction de seulement une partie de la quantité de lessive de soude requise pour la stabilisation complète et à savoir de telle sorte que la séparation du mélange en ses deux fractions s'effectue uniquement dans une fraction de temps, en particulier selon moins de la moitié, de préférence toutefois même seulement selon moins d'un tiers du temps, qui serait nécessaire pour une stabilisation complète.

6. Procédé selon la revendication 5, **caractérisé en ce que** la fraction claire est, après sa séparation d'avec la fraction trouble, complètement stabilisée par adjonction supplémentaire de lessive de soude.

7. Procédé selon l'une des revendications 4-6, **caractérisé en ce que** la fraction trouble est mélangée avec de l'éloxal usagé acide, qui apparaît également comme déchet dans l'usine de traitement Eloxal de l'aluminium.

8. Procédé selon la revendication 7, **caractérisé en ce que** le mélange composé de la fraction trouble et de l'Eloxal usagé acide est mélangé conjointement avec un décapant fortement alcalin et contenant de l'aluminium en concentration élevée et/ou avec de la boue d'hydroxyde d'aluminium.

9. Procédé selon la revendication 7 ou 8, **caractérisé en ce que** le mélange est ajusté vers des pH neutres, par formation de boue d'hydroxyde d'aluminium.

10. Procédé selon la revendication 7 ou 8, **caractérisé en ce que** le mélange est ajusté de telle façon qu'il se forme une solution acide d'aluminium, susceptible d'être directement mise en oeuvre dans une usine d'épuration.

11. Procédé selon l'une des revendications 7-10, **caractérisé en ce que** l'on y additionne un autre acide, en particulier de l'acide chlorhydrique concentré.
